# FASCICULE DE BREVET EUROPEEN

(11) **EP 2 137 005 B1**
(45) Date de publication et mention de la délivrance du brevet: **24.02.2016**
(21) Numéro de dépôt: 08717952.9
(22) Date de dépôt: 18.03.2008
(51) Int. Cl.: B60C 23/04

(54) **UNITÉ DE MESURE ET SYSTÈME DE SURVEILLANCE DE LA PRESSION DE PNEUMATIQUES À MOBILITÉ ÉTENDUE OU NON**
EINHEIT ZUM MESSEN UND SYSTEM ZUM ÜBERWACHEN DES DRUCKS BEI NOTLAUF- ODER ANDEREN REIFEN
UNIT FOR MEASURING AND SYSTEM FOR MONITORING TYRE PRESSURE IN TYRES OF THE EXTENDED MOBILITY OR OTHER TYPE

(30) Priorité: 22.03.2007 FR 0702098
(43) Date de publication de la demande: 30.12.2009
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LIBERGE, Franck, F-63830 Durtol (FR); CORNIOT, Philippe, F-63530 Enval (FR)
(74) Mandataire: Dequire, Philippe Jean-Marie Denis
(86) Numéro de dépôt international: PCT/EP2008/053219
(87) Numéro de publication internationale: WO 2008/125411

(56) Documents cités:
- EP-A2- 1 110 764
- WO-A-02/07993
- DE-A1- 10 319 092
- DE-A1- 10 358 105
- US-A- 6 087 930

## Description

### Domaine de l'invention

L'invention a pour objet une unité de mesure et un système de surveillance de la pression de pneumatiques d'un véhicule adaptés pour des pneumatiques à mobilité étendue et standard.

### Arrière plan technologique

Les systèmes de surveillance pour véhicules équipés de pneumatiques standard sont très largement diffusés. Ces systèmes usuellement avertissent le conducteur du véhicule lorsque la pression de l'un des pneumatiques diminue en dessous d'un seuil donné relativement aux pressions de gonflage de consigne.

Depuis quelques années, les manufacturiers de pneumatiques ont développé des solutions permettant de rouler avec le même pneumatique, en fonction de certaines limites à respecter, après une crevaison ou une chute de pression. Cela permet par exemple de se rendre à un point de dépannage sans devoir s'arrêter, dans des circonstances souvent hasardeuses, pour installer la roue de secours. On appelle ces solutions pneumatiques des « pneumatiques à mobilité étendue ».

Deux grands types de technologies pour mobilité étendue apparaissent aujourd'hui sur le marché automobile. D'une part, on retrouve les pneumatiques de type autoporteur, souvent désignés par leur appellation en langue anglaise ZP pour « zero pressure ». Les pneumatiques autoporteurs sont susceptibles de supporter une charge à pression réduite, voire sans pression, grâce à des flancs renforcés, le plus souvent au moyen d'inserts en matière caoutchouteuse, prévus dans les flancs.

D'autre part, on retrouve des roues équipées d'appuis, susceptibles de supporter l'intérieur de la bande de roulement d'un pneumatique lors d'un affaissement des flancs suite à une chute de pression. Cette solution est avantageusement couplée à un pneumatique comportant une zone basse susceptible de minimiser les risques de glissement du pneumatique hors de la jante. Cette solution est avantageuse puisqu'elle permet de conserver sensiblement intactes les caractéristiques de roulage en conditions normales. En revanche, elle présente l'inconvénient de nécessiter une pièce additionnelle, l'appui, pour chacune des roues du véhicule.

Pour tous les véhicules équipés de pneumatiques à mobilité étendue, un système de surveillance de la pression est obligatoire pour pouvoir avertir le conducteur du véhicule d'une perte de pression et du début du fonctionnement d'un pneumatique en mode étendue. Le conducteur sait alors qu'il doit limiter sa vitesse et que son autonomie de roulage est limitée. Certains systèmes de surveillance sont adaptés pour gérer l'autonomie restante. Le document EP 1 110 764 décrit une unité de mesure correspondant au préambule de la revendication 1.

A l'heure actuelle, les unités de mesure usuellement utilisées dans les systèmes de surveillance de la pression ne sont pas physiquement attachées au pneumatique lui-même mais sont fixées à l'arrière des valves de roues. Ainsi, après un démontage d'un ensemble pneumatique et roue, il n'est plus possible de garantir une relation entre le code d'identification de l'unité de mesure et le type de pneumatique monté.

Un autre problème se pose lorsque le conducteur du véhicule décide de remplacer un ou plusieurs des pneumatiques à mobilité étendue par un pneumatique standard. Le système de surveillance des pneumatiques à mobilité étendue du véhicule risque de ne plus être adapté pour surveiller des pneumatiques standard. Comment dans un tel cas avertir le système de surveillance du changement de type de pneumatiques ?

### Description de l'invention

L'invention a pour objet une unité de mesure d'un système de surveillance de la pression des pneumatiques d'un véhicule avec au moins un capteur de pression et des moyens de transmission de signaux et destinée à équiper un ensemble pneumatique-roue. Cette unité de mesure est caractérisée en ce qu'elle comprend un indicateur logique à deux états, actif et inactif, et en ce que l'indicateur logique devient actif à chaque fois que la pression mesurée par le capteur de pression est inférieure à un seuil donné, proche de zéro.

La pression mesurée par le capteur de pression est une valeur relative et non pas absolue. Lorsque cette pression est proche de zéro, cela veut dire que la pression mesurée est proche de la pression atmosphérique.

Préférentiellement, le seuil de pression est de 100 mbars et très préférentiellement de 200 mbars.

L'indicateur logique selon l'invention devient actif à chaque fois que la pression devient nulle ou pratiquement nulle. Cela intervient dans deux situations : lors d'un démontage de l'ensemble pneumatique-roue ou lors d'une crevaison ayant entraîné un dégonflage complet ou presque complet du pneumatique. Dans ce dernier cas, il peut toujours exister une pression relative résiduelle à l'intérieur du pneumatique de l'ordre de 100 à 150 mbars. Mais cette pression résiduelle ne permet en aucune façon à un pneumatique usuel (non à mobilité étendue) de remplir sa fonction, tout roulage dans ces conditions est un roulage à plat susceptible d'entraîner très rapidement des dommages irréparables au pneumatique. En conséquence, l'activation de l'indicateur logique a l'avantage d'enregistrer qu'un démontage ou une crevaison avec dégonflage complet du pneumatique ont eu lieu et qu'il convient de faire vérifier le pneumatique concerné pour vérifier son type s'il y a eu un démontage, ou son état après un roulage à plat ou en mode étendu.

De préférence, l'unité de mesure est adaptée pour transmettre à une unité centrale un message d'alerte lorsque l'indicateur logique est actif. Cela permet de ne pas attendre la révision suivante pour vérifier et corriger si nécessaire le fonctionnement du système de surveillance et l'état des pneumatiques du véhicule.

Avantageusement, l'indicateur logique de l'unité de mesure peut être ramené à l'état inactif par un outil de diagnostic.

L'activation de l'indicateur logique permet de détecter les démontages et de forcer l'utilisation d'un outil de diagnostic pour réinitialiser le système de surveillance et le module de roue afin de garantir qu'un spécialiste équipé d'un tel outil a inspecté le pneumatique avant de le regonfler.

Selon un mode de mise en oeuvre préférentiel, cette unité de mesure est aussi apte à mémoriser et transmettre à une unité centrale un code additionnel fonction du type de pneumatique de l'ensemble pneumatique-roue.

L'invention a aussi pour objet un système de surveillance de la pression d'un pneumatique d'un véhicule comprenant une unité centrale avec un récepteur et des moyens de traitement, et une unité de mesure disposée dans l'ensemble pneumatique-roue avec un capteur de pression et des moyens de transmission de signaux. Ce système est caractérisé en ce que l'unité de mesure comprend un indicateur logique à deux états, actif et inactif, et en ce que l'indicateur logique devient actif à chaque fois que la pression mesurée par le capteur de pression est inférieure à un seuil donné, proche de zéro.

Avantageusement, l'unité de mesure est apte à mémoriser et transmettre à l'unité centrale un code additionnel fonction du type de pneumatique de l'ensemble pneumatique-roue.

De préférence, les moyens de traitement de l'unité centrale disposent d'une pluralité de programmes de traitement des données transmises par l'unité de mesure et dans lequel chaque programme de traitement des données est adapté à un type donné de pneumatique.

Avantageusement, les signaux comportant le code additionnel peuvent être transmis par l'unité de mesure. Cela permet à tout moment de la vie du véhicule d'informer l'unité centrale d'un changement de type de pneumatique et de permettre à cette unité centrale d'utiliser le programme de surveillance adapté. Les signaux comportant le code additionnel peuvent aussi être transmis par un outil de diagnostic.

L'unité centrale peut ainsi en permanence vérifier la compatibilité entre son mode de surveillance de la pression des pneumatiques et le type de pneumatiques surveillés. En particulier, en cas d'un changement d'un ensemble pneumatique-roue à mobilité étendue par un ensemble pneumatique-roue standard, sans activation d'un indicateur logique, l'unité centrale est immédiatement avertie et cela permet un basculement automatique d'un programme à l'autre, par exemple d'un mode de surveillance pour pneumatiques à mobilité étendue vers un mode de surveillance pour pneumatiques standards, sans avoir à faire faire une intervention par un spécialiste des pneumatiques ou des véhicules.

De façon préférentielle, le code additionnel de l'unité de mesure est introduit et modifiable dans l'unité de mesure au moyen d'un outil de diagnostic.

Cela permet au spécialiste qui effectue le premier montage d'une unité de mesure sur un ensemble pneumatique-roue d'introduire le code correspondant au type de pneumatique, puis ultérieurement, en cas de changement de ce type de pneumatique de modifier le code introduit dans l'unité de mesure.

Le type de pneumatiques peut avantageusement être choisi dans le groupe des pneumatiques à mobilité étendue et des pneumatiques standards ; on peut aussi le choisir dans le groupe des pneumatiques « été » et des pneumatiques « hiver ». Il est en effet à noter que dans ce dernier cas, les vitesses limites des pneumatiques hiver sont souvent inférieures à celles des pneumatiques été homologués pour le même véhicule. Il est en conséquence très utile d'en informer l'unité centrale et d'adapter le programme de surveillance.

Pour chacun des types de pneumatique définis, en cas d'incompatibilité, le basculement peut être automatique.

### Description brève des dessins

D'autres caractéristiques et avantages de l'invention ressortent de la description faite ci-après en référence aux dessins annexés qui montrent, à titre d'exemples non limitatifs, des formes de réalisation de l'objet de l'invention.
- La figure 1 présente schématiquement un véhicule équipé d'un système de surveillance de la pression des pneumatiques :
- les figures 2 et 3 présentent schématiquement une unité de mesure selon l'invention ;
- la figure 4 présente un organigramme général d'une mise en oeuvre de l'invention ;
- la figure 5 présente un organigramme simplifié d'un premier mode de mise en oeuvre de l'invention ; et
- la figure 6 présente un organigramme simplifié d'un second mode de mise en oeuvre de l'invention.

### Description détaillée de modes de réalisation de l'invention

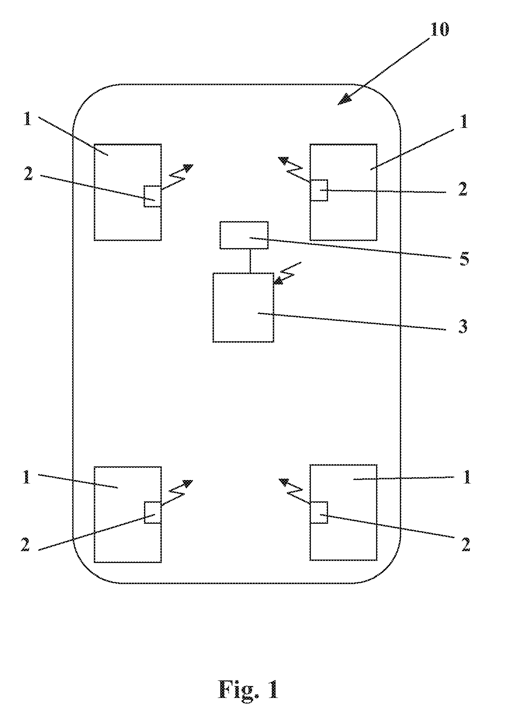

La figure 1 présente schématiquement l'implantation dans un véhicule 10 à deux essieux et quatre roues d'un système de surveillance des pneumatiques selon l'invention. Le véhicule comporte quatre ensembles pneumatique-roue 1. Le système de surveillance des pneumatiques comprend une unité de mesure 2 disposée à l'intérieur de la cavité interne de chaque pneumatique 1 et équipé notamment d'un émetteur radio et de capteurs de pression et de température, une unité centrale 3 et un afficheur 5. L'unité centrale 3 est disposée dans le véhicule par exemple sous le châssis et l'afficheur 5 est placé dans l'habitacle. L'unité centrale 3 est équipée d'une chaîne de réception et/ou émission radio.

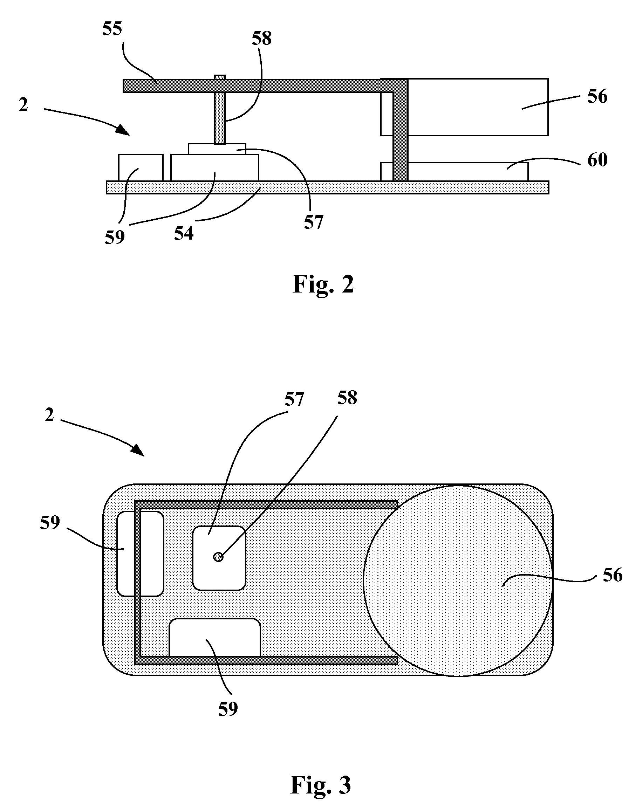

Les figures 2 et 3 représentent en vue de côté et de dessus une unité de mesure 2 selon l'invention. Ces deux vues présentent les éléments électroniques principaux qui composent l'unité de mesure avant leur incorporation dans un conditionnement tel un boîtier ou une résine d'enrobage.

Cet exemple d'unité de mesure 2 comprend un support de composants électroniques PCB 54, une antenne d'émission UHF 55, un capteur de pression 57 avec une cheminée cylindrique 58 destinée à mettre en communication fluidique la partie sensible du capteur 57 avec la cavité pneumatique définie par le pneumatique et la jante, une pile 56, deux antennes de réception LF 59 et plusieurs autres composants 60 tels que l'émetteur HF et un microprocesseur de traitement des données et des signaux reçus et émis.

Le microprocesseur est adapté pour élaborer et transmettre à l'unité centrale 3 des signaux comprenant usuellement un code d'identification spécifique à chaque unité ainsi que les données de mesure.

Selon un premier mode de réalisation d'une unité de mesure 2 selon l'invention, le microprocesseur de l'unité de mesure 2 comprend un indicateur logique qui est activé dès que le capteur de pression 57 détecte une pression quasiment nulle. Lorsque l'indicateur logique est activé, cette activation est aussi transmise à l'unité centrale.

Un outil de diagnostic permet de désactiver l'indicateur logique.

Selon un second mode de réalisation de l'invention, l'unité de mesure comprend une mémoire adaptée pour mémoriser un code additionnel fonction du type de pneumatique que l'unité de mesure équipe. Ce code additionnel est aussi transmis par l'unité de mesure. L'outil de diagnostic permet de modifier le code additionnel.

Un tel outil de diagnostic permet de dialoguer directement ou indirectement avec des unités de mesure telle l'unité 2. L'outil permet notamment d'identifier les codes d'identification des unités de mesure, de visualiser les résultats de mesure, d'effectuer des réglages des programmes de test des unités etc. Un exemple d'outil de diagnostic est le VT60 commercialisé par la société ATEQ. Cet outil dialogue directement par radio avec les unités de mesure. Un autre exemple d'outil de diagnostic est un PC connecté à la prise diagnostic du véhicule. Ce PC peut réaliser toutes les opérations précédentes via cette prise diagnostic et l'unité centrale du système de surveillance. C'est alors l'unité centrale qui émet une commande radio particulière vers l'unité de mesure.

L'unité de mesure 2 est usuellement fixée à l'arrière d'une valve destinée à être fixée sur la roue.

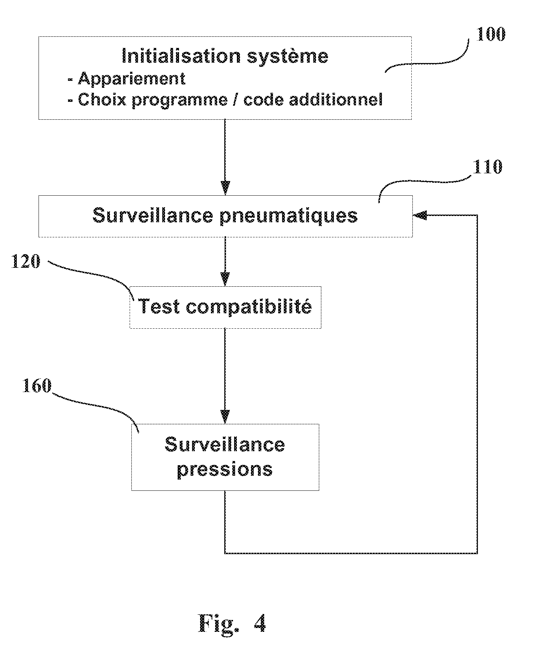

La figure 4 présente un organigramme général et simplifié d'un mode de mise en oeuvre d'un système de surveillance selon l'invention.

Dans ce mode de mise en oeuvre, l'unité centrale comprend une pluralité de programmes de traitement des données et est adaptée pour recevoir et traiter des signaux comprenant un code additionnel transmis par un outil de diagnostic et chaque unité de mesure comprend un indicateur logique à deux états, actif et inactif, activé lors de la mesure d'une pression proche de zéro.

L'étape 100 correspond à l'étape de première initialisation du système dans le véhicule. Cette première initialisation est usuellement réalisée à la fin des chaînes de montage des véhicules. La phase d'appariement correspond à attribuer à chaque unité de mesure une position déterminée du véhicule et à stocker en mémoire de l'unité centrale cette attribution, cet appariement peut se faire automatiquement ou non. La phase de choix du programme de traitement des données de l'unité centrale correspond à choisir le programme de traitement en fonction du type de pneumatiques équipant le véhicule, soit par exemple quatre pneumatiques à mobilité étendue.

A l'étape 110, le système se met en fonctionnement lorsque le véhicule est démarré. Il est à noter que certains éléments du système de surveillance de la pression des pneumatiques peuvent tout à fait fonctionner en continu à partir de leur première activation en usine.

L'invention consiste à ajouter ou à compléter au mode de surveillance usuel un test de compatibilité multiple, étape 120 avant d'effectuer l'étape 160 de contrôle des pressions des pneumatiques.

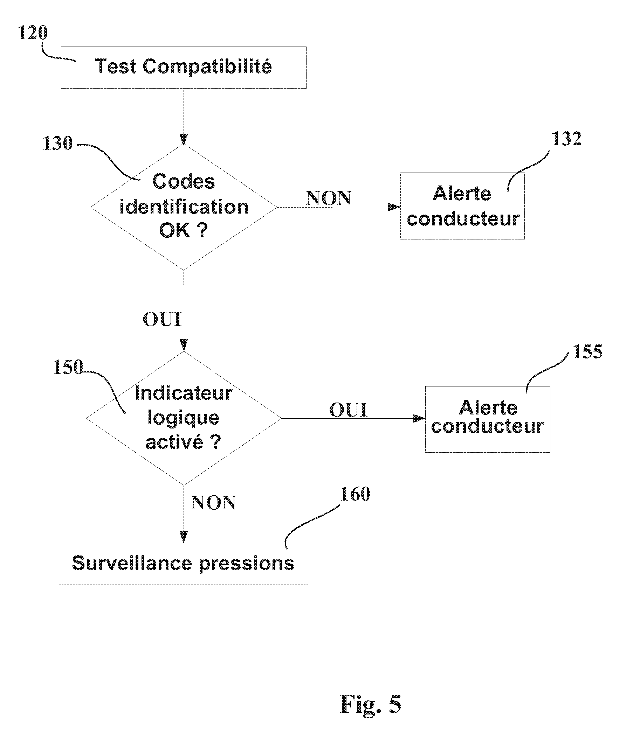

La figure 5 illustre le test de compatibilité dans le cas d'un premier mode de mise en oeuvre de l'invention. Dans ce premier mode de mise en oeuvre, l'unité centrale est adaptée pour recevoir et traiter des signaux comportant un code additionnel lié au type de pneumatiques montés provenant d'un outil de diagnostic.

Ce test de compatibilité 120 commence par une vérification des codes d'identification reçus en provenances des unités de mesure relativement à ceux stockés dans l'unité centrale, étape 130. Si le résultat est négatif, cela indique que l'une au moins des unités de mesure a été changée, c'est-à-dire qu'un pneumatique ou un ensemble pneumatique roue a été changé, cela peut aussi indiquer un défaut de fonctionnement de l'unité de mesure.

Une alerte conducteur 132 est alors déclenchée pour demander au conducteur de faire vérifier le fonctionnement du système et ses pneumatiques pour être certain que l'ensemble pneumatique-roue qui remplace l'un au moins des ensembles initiaux est bien du même type et si tel n'est pas le cas pour transmettre à l'unité centrale le code additionnel correspondant au nouvel ensemble au moyen d'un outil de diagnostic.

Après l'étape 130 si les codes sont corrects, le test se poursuit à l'étape 150 pour vérifier si l'indicateur logique de l'une des unités de mesure est activé ou non.

Dans le cas d'une perte de pression par crevaison ou tout autre cause, cela veut dire qu'un roulage en mode étendu a eu lieu sans qu'un spécialiste n'ait vérifié le bon état des pneumatiques après ce roulage.

Cela peut aussi indiquer que le pneumatique concerné a été démonté puis le même pneumatique ou un autre a été remonté mais toujours sans qu'un spécialiste ne valide l'opération. Par spécialiste, on entend un négociant de pneumatiques ou un garagiste.

Dans ces deux cas, le système ne peut plus être certain du bon état physique des pneumatiques ou de la compatibilité des pneumatiques avec le programme de surveillance et l'unité centrale envoie une alerte au conducteur lui enjoignant de faire vérifier ses pneumatiques au plus tôt, étape 155.

A l'issue de l'étape 150, ou 155 s'il y a lieu, le système analyse de façon usuelle les données reçues des unités de mesure pour déterminer si les pressions de gonflage sont satisfaisantes ou non, étape 160.

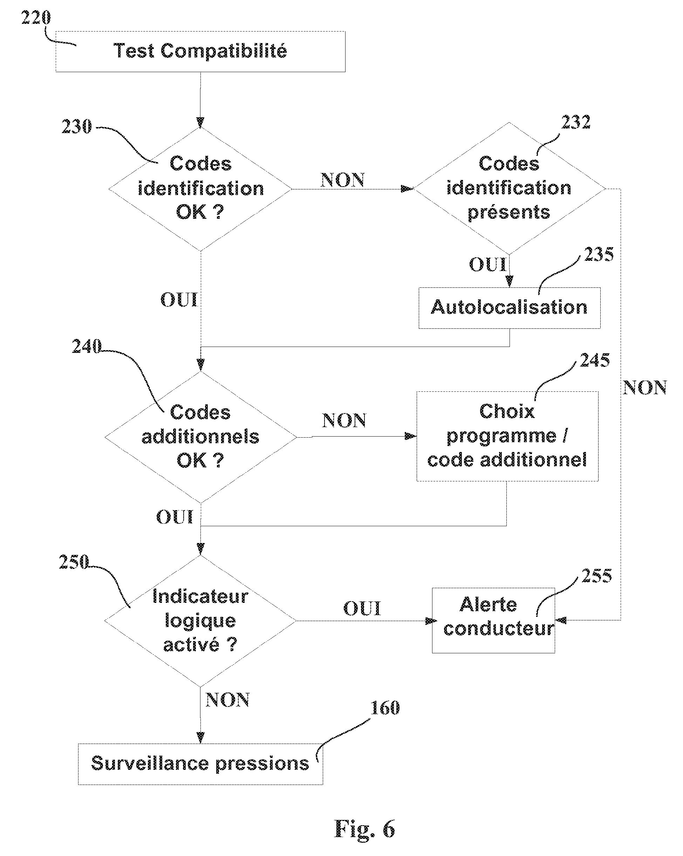

La figure 6 présente le test de compatibilité dans le cas d'un second mode de réalisation de l'invention dans lequel l'unité de mesure est en outre adaptée pour mémoriser et transmettre à l'unité centrale un code additionnel fonction du type de pneumatique équipant l'ensemble pneumatique-roue qu'elle surveille. Ce test considère aussi le cas préférentiel où l'appariement ou localisation des codes d'identification des unités de mesure dans l'unité centrale s'effectue automatiquement sans intervention ni du conducteur ni d'un spécialiste. On parle alors d'étape « d'auto localisation ».

Le test de compatibilité 220 commence comme précédemment par la vérification des codes d'identification des unités de mesure relativement aux codes stockés dans l'unité centrale (étape 230).

En cas de désaccord, on teste à l'étape 232 la réception d'un code par pneumatique.

Si tous les codes sont reçus, l'étape d'auto localisation (étape 235) est lancée et l'unité centrale stocke en mémoire les nouveaux codes d'identification reçus.

Si au moins un code d'identification est absent, cela indique que l'une des unités de mesure est absente ou défectueuse et une alerte conducteur est délivrée (étape 255).

Après les étapes 230 ou 235, on teste à l'étape 240 la conformité des codes additionnels transmis en continu par les unités de mesure avec les codes additionnels stockés dans l'unité centrale.

Si le test est négatif, l'unité centrale bascule automatiquement, pour le ou les pneumatiques concernés, dans le programme de traitement des données reçues adapté au pneumatique effectivement monté sur le véhicule (étape 245).

Après l'étape 240 ou 245 s'il y a lieu, le test 220 se poursuit à l'étape 250 pour vérifier si l'indicateur logique de l'une des unités de mesure est activé ou non. Et, si l'une des unités de mesure a son indicateur logique activé, une alerte conducteur est délivrée (étape 255).

Le contrôle des pneumatiques se poursuit ensuite à l'étape 160.

Le fait que l'unité de mesure mémorise et transmet à l'unité centrale ce code additionnel donnant le type de pneumatique surveillé, permet à cette unité centrale de vérifier en continu la compatibilité entre les types de pneumatiques et les programmes de surveillance associés.

Ce mode de réalisation a l'avantage, dans le cas d'un changement par le conducteur d'un ou de plusieurs ensembles pneumatiques-roues complet, par exemple leur remplacement par des pneumatique neige standards ou usuels (non à mobilité étendue) de déterminer automatiquement à l'étape 230 la présence de quatre nouveaux codes d'identification, de lancer le programme d'auto localisation (étape 235 de la figure 5) pour affecter et mémoriser pour chaque position le code d'identification approprié et permettre à l'unité centrale de détecter que ces codes additionnels sont différents (étape 240) et basculer automatiquement (étape 245) dans les programmes de surveillance adaptés aux pneumatiques hiver montés sans avoir à demander au conducteur de faire vérifier ses pneumatiques.

Ce mode de mise en oeuvre de l'invention a l'avantage de ne demander au conducteur du véhicule d'aller chez un spécialiste pour faire vérifier ses pneumatiques et/ou le système de surveillance que lorsque c'est vraiment nécessaire.

L'invention n'est pas limitée aux exemples décrits et représentés et diverses modifications peuvent y être apportées sans sortir de son cadre défini par les revendications annexées.

## Revendications

1. Unité de mesure (2) avec au moins un capteur de pression (57) et des moyens de transmission de signaux (54, 55, 59, 60), destinée à équiper un ensemble pneumatique-roue (1) et comprenant un indicateur logique à deux états, actif et inactif **caractérisé en ce que** l'indicateur logique devient actif à chaque fois que la pression mesurée par le capteur de pression (57) est inférieure à un seuil donné, proche de zéro et égal à 100 ou 200 mbars.

2. Unité de mesure (2) selon la revendication 1, adaptée pour transmettre à une unité centrale (3) un message d'alerte lorsque l'indicateur logique est actif.

3. Unité de mesure (2) selon l'une des revendications 1 et 2, dans lequel l'indicateur logique de l'unité de mesure (2) peut être ramené à l'état inactif par un outil de diagnostic.

4. Unité de mesure (2) selon l'une quelconque des revendications 1 à 3, apte à mémoriser et transmettre à une unité centrale (3) un code additionnel fonction du type de pneumatique de l'ensemble pneumatique-roue.

5. Système de surveillance de la pression d'un pneumatique d'un véhicule comprenant une unité centrale (3) avec un récepteur et des moyens de traitement, et une unité de mesure (2) selon l'une quelconque des revendications 1 à 4.

6. Système selon la revendication 5 prise en combinaison avec la revendication 4, dans lequel les moyens de traitement de l'unité centrale (3) disposent d'une pluralité de programmes de traitement des données transmises par l'unité de mesure (2) et dans lequel chaque programme de traitement des données est adapté à un type donné de pneumatique.

7. Système selon l'une des revendications 5 et 6, dans lequel les signaux comportant un code additionnel sont transmis par un outil de diagnostic.

8. Système selon l'une des revendications 5 à 7, dans lequel les signaux comportant un code additionnel sont transmis par l'unité de mesure (2).

9. Système selon la revendication 8, dans lequel le code additionnel mémorisé par l'unité de mesure (2) est modifiable au moyen d'un outil de diagnostic.

10. Système selon l'une des revendications 6 à 9, dans lequel le type de pneumatique est choisi dans le groupe des pneumatiques à mobilité étendue et des pneumatiques usuels.

11. Système selon la revendication 10, dans lequel le type de pneumatique est choisi dans le groupe des pneumatiques « été » et des pneumatiques « hiver ».

## Patentansprüche

1. Messeinheit (2) mit mindestens einem Drucksensor (57) und Signalübertragungseinrichtungen (54, 55, 59, 60), die dazu bestimmt ist, eine Reifen-Rad-Einheit (1) zu bestücken, und die einen logischen Anzeiger mit zwei Zuständen, aktiv und inaktiv, enthält, **dadurch gekennzeichnet, dass** der logische Anzeiger immer dann aktiv wird, wenn der vom Drucksensor (57) gemessene Druck unter einer gegebenen Schwelle nahe Null und gleich 100 oder 200 mbar ist.

2. Messeinheit (2) nach Anspruch 1, die geeignet ist, an eine Zentraleinheit (3) eine Alarmmitteilung zu senden, wenn der logische Anzeiger aktiv ist.

3. Messeinheit (2) nach einem der Ansprüche 1 und 2, wobei der logische Anzeiger der Messeinheit (2) durch ein Diagnosewerkzeug in den inaktiven Zustand zurückgebracht werden kann.

4. Messeinheit (2) nach einem der Ansprüche 1 bis 3, die einen zusätzlichen Code abhängig vom Reifentyp der Reifen-Rad-Einheit speichern und an eine Zentraleinheit (3) übertragen kann.

5. System zur Überwachung des Drucks eines Reifens eines Fahrzeugs, das eine Zentraleinheit (3) mit einem Empfänger und Verarbeitungseinrichtungen und eine Messeinheit (2) nach einem der Ansprüche 1 bis 4 enthält.

6. System nach Anspruch 5 in Kombination mit Anspruch 4, wobei die Verarbeitungseinrichtungen der Zentraleinheit (3) über eine Vielzahl von Verarbeitungsprogrammen der von der Messeinheit (2) übertragenen Daten verfügen, und wobei jedes Verarbeitungsprogramm der Daten für einen gegebenen Reifentyp geeignet ist.

7. System nach einem der Ansprüche 5 und 6, wobei die einen Zusatzcode aufweisenden Signale durch ein Diagnosewerkzeug übertragen werden.

8. System nach einem der Ansprüche 5 bis 7, wobei die einen Zusatzcode aufweisenden Signale durch die Messeinheit (2) übertragen werden.

9. System nach Anspruch 8, wobei der von der Messeinheit (2) gespeicherte Zusatzcode mittels eines Diagnosewerkzeugs verändert werden kann.

10. System nach einem der Ansprüche 6 bis 9, wobei der Reifentyp aus der Gruppe der Reifen mit Notlaufeigenschaften und der üblichen Reifen ausgewählt wird.

11. System nach Anspruch 10, wobei der Reifentyp aus der Gruppe der « Sommerreifen » und « Winterreifen » ausgewählt wird.

## Claims

1. Measuring unit (2) with at least a pressure sensor (57) and signal transmission means (54, 55, 59, 60), intended to be fitted on a tire/wheel assembly (1), and comprising a logic indicator with two states, active and inactive, and in that the logic indicator becomes active each time the pressure measured by the pressure sensor (7) is below a given threshold, close to zero and equal to 100 or 200 mbars.

2. Measuring unit (2) according to Claim 1, designed to transmit an alert message to a central unit (3) when the logic indicator is active.

3. Measuring unit (2) according to one of Claims 1 and 2, in which the logic indicator of the measuring unit (2) can be returned to the inactive state by a diagnostic tool.

4. Measuring unit (2) according to any one of Claims 1 to 3, capable of storing and transmitting to a central unit (3) an additional code dependent on the type of tire of the tire/wheel assembly.

5. System for monitoring the pressure of a tire of a vehicle comprising a central unit (3) with a receiver and processing means, and a measuring unit (2) according to any one of Claims 1 to 4.

6. System according to Claim 5, taken in conjunction with Claim 4, in which the processing means of the central unit (3) have a plurality of programs for processing data transmitted by the measuring unit (2) and in which each data processing program is suited to a given type of tire.

7. System according to one of Claims 5 and 6, in which the signals comprising an additional code are transmitted by a diagnostic tool.

8. System according to one of Claims 5 to 7, in which the signals comprising an additional code are transmitted by the measuring unit (2).

9. System according to Claim 8, in which the additional code stored by the measuring unit can be modified by means of a diagnostic tool.

10. System according to one of Claims 6 to 9, in which the type of tire is chosen from the group of tires with extended mobility and standard tires.

11. System according to Claim 10, in which the type of tire is chosen from the group of "summer" tires and "winter" tires.
